**Europäisches Patentamt**

**European Patent Office**

**Office européen des brevets**

(11) Veröffentlichungsnummer: **0 011 061**
A1

# EUROPÄISCHE PATENTANMELDUNG

(21) Anmeldenummer: **79890044.5**

(22) Anmeldetag: **30.10.79**

(51) Int. Cl.³: **A 21 C 13/00,** A 21 C 13/02, A 21 C 9/08

(30) Priorität: **02.11.78 AT 7820/78**

(43) Veröffentlichungstag der Anmeldung: **14.05.80** **Patentblatt 80/10**

(84) Benannte Vertragsstaaten: **BE CH DE FR GB IT LU NL SE**

(71) Anmelder: **Schimke, Friedrich, Hermanngasse 10, A-1070 Wien (AT)**

(72) Erfinder: **Schimke, Friedrich, Hermanngasse 10, A-1070 Wien (AT)**

(74) Vertreter: **Itze, Peter, Dipl.-Ing. et al, Patentanwälte Dipl.-Ing. Leopold Friebel Dipl.-Ing. Peter Itze Zieglergasse 57/11, A-1070 Wien (AT)**

(54) **Gärschrank für die Backwarenbereitung.**

(57) Bei diesem Gärschrank (1) sind zwei voneinander unabhängige Fördereinrichtungen vorgesehen, von denen die erste zur Aufnahme der mit den vorzugärenden Teigstücken beladenen Kipptrögelapparate (9) und die zweite zur Aufnahme der mit den der Hauptgärung zu unterwerfenden Teigstücken beladenen Kipptrögelapparate (9) bestimmt ist, wobei jede der Fördereinrichtungen Rahmen (2, 3) zur Aufnahme der Kipptrögelapparate (9) aufweist.

Zwecks platzsparender Ausbildung und störungsfreier Funktion sind die, Laufschienen (3', 3'') für die Kipptrögelapparate (9) aufweisenden Aufnahmerahmen (2, 3) mindestens doppelt so breit wie die Kipptrögelapparate (9), wobei die Aufnahmerahmen (2, 3) unabhängig voneinander anheb- und absenkbar sind und Einrichtungen (7, 8) zum horizontalen Verschieben der Kipptrögelapparate (9) quer zu deren Einlaufrichtung aufweisen.

ACTORUM AG

## Gärschrank für die Backwarenbereitung

Die Erfindung bezieht sich auf einen Gärschrank für die Backwarenbereitung, in welchem zwei voneinander unabhängige Fördereinrichtungen vorgesehen sind, von denen die erste zur Aufnahme der mit den vorzugärenden Teigstücken beladenen Kipptrögelapparate und die zweite zur Aufnahme der mit den der Hauptgärung zu unterwerfenden Teigstücken beladenen Kipptrögelapparate bestimmt ist, wobei jede der Fördereinrichtungen Rahmen zur Aufnahme der Kipptrögelapparate aufweist.

Bei der durch die AT-PS Nr. 335941 bekannten Ausbildung dieser Art sind die Fördereinrichtungen durch Kettenförderer gebildet, bei welchen an en Ketten die Aufnahmerahmen für die Kipptrögelapparate in gleichen gegenseitigen Abständen angeordnet sind. Die Ketten laufen dabei mehrmals über Umlenkrollen, da z.B. die mit den der Hauptgärung zu unterwerfenden Teigstücken beladenen Kipptrögelapparate so anzuordnen sind, daß sie der Anordnung der Beschickungsöffnungen eines gegenüberliegenden Etagenbackofens entsprechend zu liegen kommen. Die Aufnahmerahmen weisen Haltestifte auf, mit welchen sie in Führungskulissen eingreifen, um eine horizontale Führung der Aufnahmerahmen zu erreichen. Eine solche Ausbildung hat den Nachteil, daß die Führung der Aufnahmerahmen sehr aufwendig ist und überdies mit hoher Präzision gefertigt sein muß, da es sonst im Bereich der Umlenkrollen zu einem Sperren oder Spießen der Fördereinrichtung kommen kann, weil sich die Aufnahmerahmen dort in einer unstabilen Lage befinden.

Erfindungsgemäß werden diese Nachteile dadurch vermieden, daß die, Laufschienen für die Kipptrögelapparate aufweisenden Aufnahmerahmen mindestens doppelt so breit wie die Kipptrögelapparate sind, daß die Aufnahmerahmen unabhängig voneinander anheb- und absenkbar sind und Einrichtungen zum horizontalen Verschieben der Kipptrögelapparate quer zu deren Einlaufrichtung aufweisen. Dadurch arbeiten die beiden Fördereinrichtungen störungsfrei, wobei die unabhängig voneinander anheb- und absenkbaren Aufnahmerahmen einzeln aus einer Warteposition, in welcher sie platzsparend aufbewahrt sind, in die Arbeitsposition bewegt werden können.

Vorteilhafterweise kann für das Anheben und Absenken der Aufnahmerahmen jeder derselben an einem separaten Seilzug aufgehängt sein, wodurch eine einfache und platzsparende Ausbildung erzielt ist. Die Einrichtungen zum horizontalen Verschieben der Kipptrögelapparate können als quer zur Einlaufrichtung der letzteren verlaufende Förderbänder ausgebildet sein, was ebenfalls eine platzsparende Ausbildung ergibt. Dabei kann bei den für die Aufnahme der mit den vorzugärenden Teigstücken beladenen Kipptrögelapparate bestimmten Aufnahmerahmen die in Einlaufrichtung gemessene Entfernung der Förderbänder der in Längsrichtung der Kipptrögelapparate gemessenen Entfernung zwischen den an letzteren vorgesehenen Laufrollen entsprechen.

Bei einem Gärschrank der eingangs genannten Art, welcher direkt vor einem, herausziehbare Netzbänder aufweisenden Backofen angeordnet ist, können bei den für die Aufnahme der mit den der Hauptgärung zu unterwerfenden Teigstücken beladenen Kipptrögelapparate bestimmten Aufnahmerahmen die backofenseitigen Querstege portalartig ausgebildet sein. Dadurch wird vermieden, daß das Herausziehen der abgelegten Teigstücke unter den Aufnahmerahmen durch letztere behindert wird. Zu demselben Zweck kann bei den für die Aufnahme der mit den der Hauptgärung zu unterwerfenden Teigstücken beladenen Kipptrögelapparate bestimmten Aufnahmerahmen das backofenseitige Förderband gleich hoch angeordnet sein wie der waagrechte Oberteil des portalartigen Quersteges. Um ein Ablegen der fertiggegorenen Teigstücke direkt auf die Netzbänder zu ermöglichen, können bei den für die Aufnahme der mit den der Hauptgärung zu unterwerfenden Teigstücken beladenen Kipptrögelapparate bestimmten Aufnahmerahmen unterhalb der Laufschienen für die Kipptrögelapparate weitere Laufschienen für das Einlaufen der aus dem Backofen herausziehbaren Netzbänder vorgesehen sein. Dabei kann an den weiteren, für die Netzbänder bestimmten Laufschienen eine Fördereinrichtung für das Herausziehen der Netzbänder aus dem Backofen angeordnet sein. Ferner können die weiteren, für die Netzbänder bestimmten Laufschienen mit ihren backofenseitigen Enden an den Laufschienen für die Kipptrögelapparate, gegebenenfalls über Laschen, schwenkbar angelenkt sein, wobei ihre andern Ende absenkbar sind, wodurch ein einfaches Ausbacken der fertigen Gebäckstücke erreichbar ist. Zum Absenken der andern Enden der weiteren, für die Netzbänder bestimmten Laufschienen kann ein Seilzug mit an dem zugehörigen Aufnahmerahmen angeordneter Seiltrommel vorgesehen sein. Um ein händisches Belegen der Kipptrögelapparate oder der Netzbänder im Gärschrank zu ermöglichen, kann wenigstens einer der Laufschienen für die Kipptrögelapparate bildenden Längsholme der Aufnahmerahmen an an den Querstegen angelenkten Laschen befestigt sein und der Gärschrank in wenigstens jener Seitenwand, die dem solcherart einklappbaren Längsholm benachbart ist, eine Tür aufweisen. Um ein händisches Beschicken des Backofens bzw. ein händisches Ausbacken zu ermöglichen, können alle Aufnahmerahmen über die Höhe der obersten Etage des dem Gärschrank gegenüberliegenden Backofens anhebbar sein, wobei der Gärschrank in wenigstens einer seiner Seitenwände eine Tür aufweist.

In der Zeichnung ist ein Ausführungsbeispiel des Erfindungsgegenstandes dargestellt.

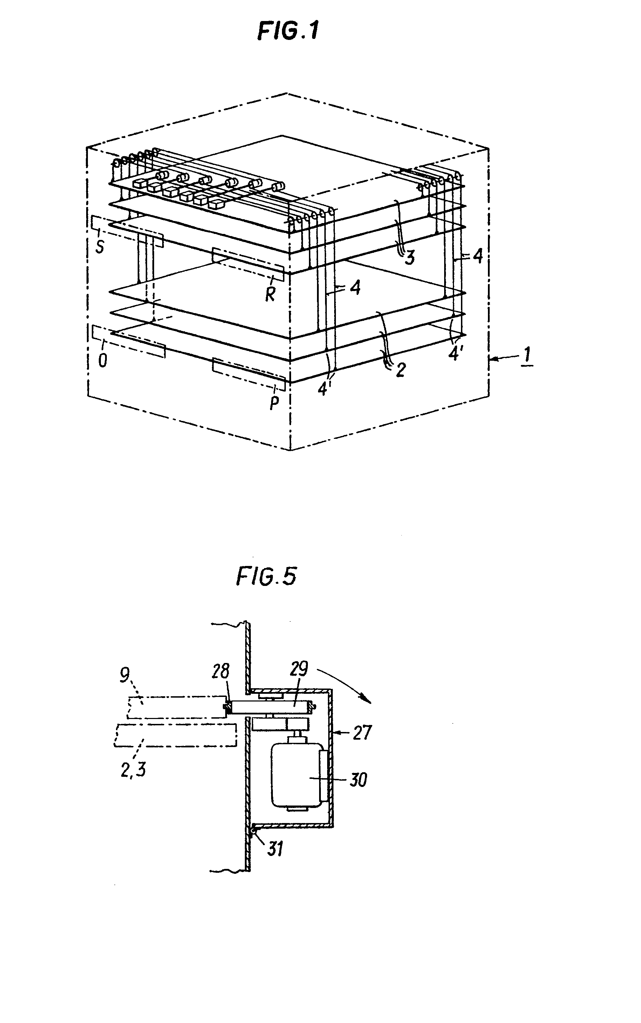

Fig. 1 zeigt schematisch ein Schaubild des Inneren des Gärschrankes.

Fig. 2 zeigt eine Draufsicht auf einen Aufnahmerahmen für die mit den der Hauptgärung zu unterwerfenden Teigstücken beladenen Kipptrögelapparate.

Fig. 3 ist ein Schnitt nach Linie III-III der Fig. 2.

Fig. 4 stellt einen Schnitt nach Linie IV-IV der Fig. 3 dar.

Fig. 5 zeigt im Aufrißschnitt eine Einrichtung zum vollständigen Einschieben bzw. zum Einleiten des Herausziehens der Kipptrögelapparate aus dem Gärschrank.

Fig. 6 zeigt schematisch einen Grundriß einer Anlage zur Erzeugung von Backwaren, wobei der Weg der Kipptrögelapparate angedeutet ist.

Fig. 7 ist ein Seitenriß der Anlage gemäß Fig. 6.

Fig. 8 gibt schaubildlich den erfindungsgemäßen Gärschrank wieder.

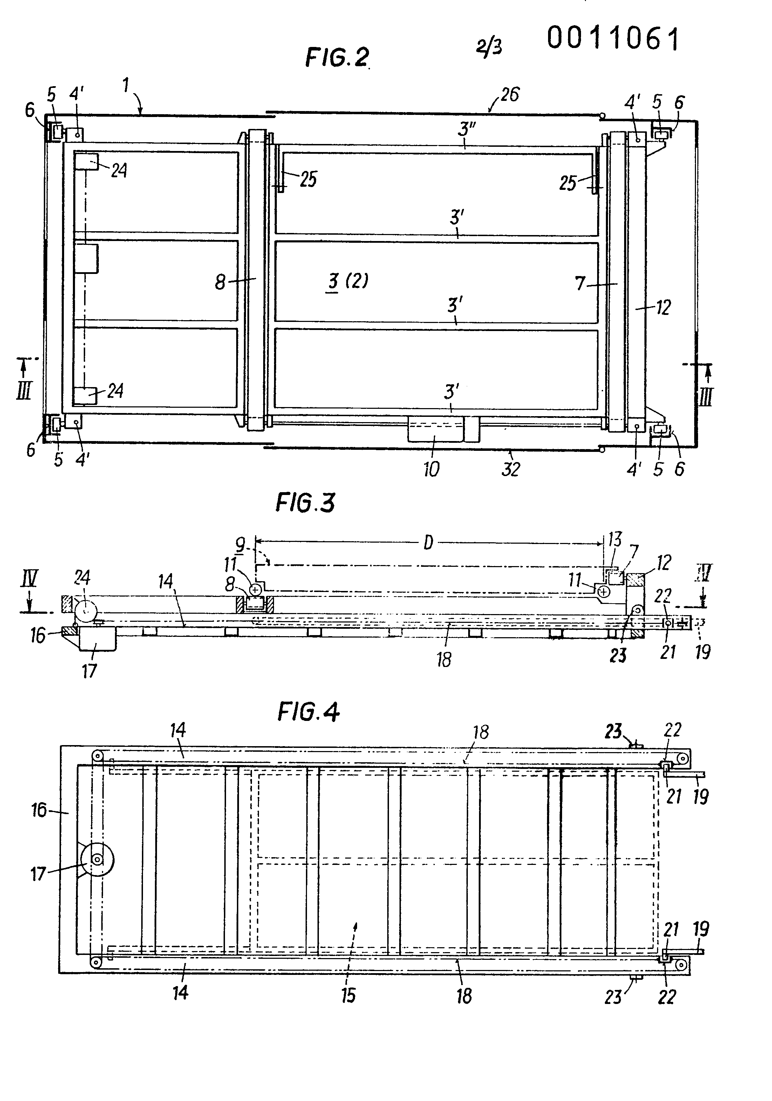

Im Gärschrank 1 sind Aufnahmerahmen 2 für die mit den vorzugärenden Teigstücken beladenen Kipptrögelapparate 9 und Aufnahmerahmen 3 für die mit den der Hauptgärung zu unterwerfenden Teigstücken beladenen Kipptrögelapparate vorgesehen. Die Aufnahmerahmen 2 sind im folgenden kurz als "Vorgärrahmen", die Aufnahmerahmen 3 kurz als "Hauptgärrahmen" bezeichnet. Alle Rahmen, also sowohl die Vorgärrahmen 2 als auch die Hauptgärrahmen 3, sind unabhängig voneinander anheb- und absenkbar, wobei für dieses Anheben und Absenken jeder Aufnahmerahmen an einem separaten Seilzug 4 bei 4' aufgehängt ist. Die Rahmen sind dabei über an jeder Ecke derselben angeordnete Gleiter 5 in vertikal verlaufenden Schienen 6 geführt. Die Vorgärrahmen 2 und die Hauptgärrahmen 3 sind im wesentlichen analog aufgebaut und gleichen einander im Grundriß, weshalb in der Zeichnung (Fig. 2) nur der Grundriß eines Hauptgärrahmens wiedergegeben ist. An jedem Rahmen ist eine Einrichtung zum horizontalen Verschieben der Kipptrögelapparate 9 vorgesehen, welche als quer zur Einlaufrichtung der letzteren verlaufende, mittels eines Getriebemotors 10 antreibbare Förderbänder 7, 8 ausgebildet ist. Bei den Vorgärrahmen 2 entspricht der gegenseitige Abstand der Förderbänder etwa der gegenseitigen Entfernung D der an den Kipptrögelapparaten 9 vorgesehenen Laufrollen 11, auf welchen die Kipptrögelapparate auf den Laufschienen 3', 3" der Aufnahmerahmen 2, 3 rollen. Bei den Hauptgärrahmen 3 ist der backofenseitige Quersteg 12 portalartig ausgebildet, wobei das backofenseitige Förderband 7 gleich hoch angeordnet ist wie der waagrechte Oberteil des portalartigen Steges 12. Beim Vorgären laufen die Kipptrögelapparate 9 sowohl mit den in Einlaufrichtung vorderen als auch mit den hinteren Laufrollen 11 auf die Förderbänder 7,8 auf. Beim Hauptgärrahmen hingegen ist, wie angeführt, das ofenseitige Förderband in der gleichen Höhe wie der waagrechte Teil des Quersteges 12 angeordnet, wobei am Kipptrögelapparat Vorsprünge 13 vorgesehen sind, welche sich auf das ofenseitige Förderband 7 auflegen. Damit eine vollkommene Auflage der Vorsprünge 13 am Förderband 7 stattfindet, sind die Laufschienen 3' am ofenseitigen Ende so abgestuft, daß bei Aufliegen der Vorsprünge 13 am Förderband 7 die am ofenseitigen Ende der Kipptrögelapparate vorgesehenen Laufrollen frei hängen.

An den Hauptgärrahmen 3 sind unterhalb der Laufschienen 3', 3" für die Kipptrögelapparate 9 weitere Laufschienen 14 für das Einlaufen der aus dem Backofen 20 herausziehbaren Netzbänder 15 vorgesehen. Die beiden Laufschienen sind an ihren dem Backofen abgewandten Enden durch einen Steg 16 miteinander verbunden. An dem Steg 16 ist der Antriebsmotor 17 für an den Laufschienen 14 angeordnete, als umlaufende Seilzüge ausgebildete Fördereinrichtungen 18 für das Herausziehen der Netzbänder 15 aus dem Backofen 20 vorgesehen. Die Rahmen der Netzbänder 15 weisen dabei die Backofentüren durch Ausnehmungen durchsetzende Verlängerungen 19 der Längsholme auf, welche sich bei vollkommen in den Backofen ein-

geschobenen Netzbändern 15 bis in den Gärschrank erstrecken. An den freien Enden der Verlängerungen 19 sind Vorsprünge 21 vorgesehen, welche in Mitnehmer 22 der Fördereinrichtungen 18 dann eingreifen, wenn sich der zugehörige Hauptgärrahmen 3 in der richtigen Höhe vor der Beschickungstür des Backofens 20 befindet. Die Mitnehmer 22 sind dabei so ausgebildet, daß die Hauptgärrahmen 3 mit den Laufschienen 14 für die Netzbänder 15 angehoben oder abgesenkt werden können, ohne durch die Vorsprünge 21 der Verlängerungen 19 behindert zu werden. Die Laufschienen 14 sind backofenseitig am Hauptgärrahmen 3 über Laschen 23 schwenkbar angelenkt, wobei ihre durch den Steg 16 verbundenen anderen Enden absenkbar sind. Dazu ist ein Seilzug mit am Hauptgärrahmen 3 angeordneter Seiltrommel 24 vorgesehen.

Sowohl bei den Vorgärrahmen 2 als auch bei den Hauptgärrahmen 3 ist einer der Längsholme der Rahmen nach innen klappbar. Dazu ist gemäß Fig. 2 der die Laufschienen 3" bildende Längsholm an an den Querstegen angelenkten Laschen 25 befestigt. In der der Laufschiene 3" zugekehrten Seitenwand ist eine Tür 26 vorgesehen. In den gegenüberliegenden Seitenwand befindet sich eine weitere Tür 32.

Die Aufnahmerahmen 2, 3 für die Kipptrögelapparate 9 sind um die Länge der Verlängerungen 19 der Rahmen der Netzbänder 15 länger als die Kipptrögelapparate. Dies deshalb, weil die Netzbänder 15 so weit auf den für sie bestimmten Laufschienen 14 in den Gärschrank hineinziehbar sein müssen, daß sie genau unter den auf den Förderbändern 7, 8 aufruhenden Kipptrögelapparaten zu liegen kommen.

Mit 27 bzw. 27x, 27y, 27z ist je eine Transporteinrichtung für die Kipptrögelapparate bezeichnet, mittels welcher letztere bis zu ihrem Aufliegen auf den Förderbändern 7, 8 auf den Aufnahmerahmen 2, 3 vorgeschoben werden können. Diese Transporteinrichtung 27 ist durch eine umlaufende Kette 28 gebildet, an welcher Mitnehmer zum Eingreifen in die Lochungen der Längsholme der Kipptrögelapparate vorgesehen sind. Mit 29 sind die Umlenkrollen der Kette bezeichnet, wobei die gegenseitige Distanz dieser Rollen größer ist als der den Verlängerungen 19 der Rahmen der Netzbänder 15 entsprechende Teil der Aufnahmerahmen 2, 3. Als Antrieb für die Fördereinrichtung 27 ist ein Getriebemotor 30 vorgesehen. Damit die Fördereinrichtung 27 das Anheben bzw. Absenken der Aufnahmerahmen 2, 3 für die Kipptrögelapparate nicht behindert, ist sie um ein Scharnier 31 aus der Bewegungsbahn der Aufnahmerahmen 2, 3 herausschwenkbar.

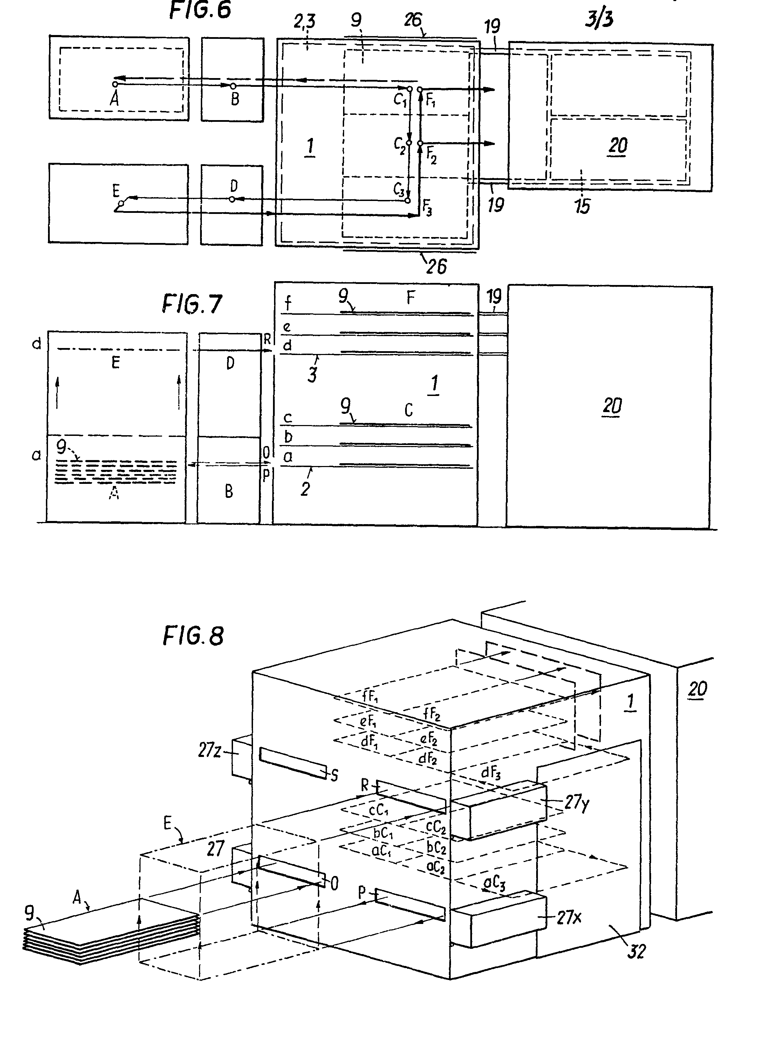

Der Funktionsverlauf wird nachstehend an Hand der Figuren 6 bis 8 geschildert, und zwar zuerst für die Erzeugung von Semmeln oder anderem geformten Gebäck.

Die Kipptrögelapparate werden einzeln aus dem Kipptrögelmagazin A heraus- und in die Teigteil- und Schleifmaschine B eingeführt, wo sie mit den geschliffenen Teigstücken belegt werden. Die aus der Teigteil- und Schleifmaschine B auslaufenden Kipptrögelapparate laufen sofort durch die Öffnung O in den Gärschrank 1 ein. Der erste Kipptrögelapparat läuft auf die Laufschienen des obersten, auf dem Niveau a bereitstehenden Vorgärrahmen 2 und wird auf diesem mittels der Transporteinrichtung 27 so weit gegen den Backofen geschoben, bis die Laufrollen 10 auf den Förderbändern 7, 8 aufliegen (Position $aC_1$ in Fig. 8). Danach wird der erste Kipptrögelapparat mittels der Förderbänder quer zu seiner Einlaufrichtung in die Position $aC_2$ verschoben und ein zweiter Kipptrögelapparat läuft in Position $aC_1$ ein. Der mit den beiden Kipptrögelapparaten beladene Vorgärrahmen wird auf das Niveau b, und der nächste noch leere Vorgärrahmen auf das freigewordene Niveau a gehoben. Nun wird der letztgenannte Vorgärrahmen mit zwei Kipptrögelapparaten beladen. Anschließend wird der erste Vorgärrahmen von dem Niveau b auf das Niveau c, der zweite Vorgärrahmen auf das Niveau b und ein dritter Vorgärrahmen auf das Niveau a gehoben und dann der letzte Vorgärrahmen ebenfalls mit Kipptrögelapparaten beladen. Während des Anhebens der Vorgärrahmen wird immer die Fördereinrichtung 27 aus der Bewegungsbahn der Vorgärrahmen herausgeschwenkt. Am Ende der Vorgärzeit werden die Vorgärrahmen abgesenkt, und zwar so weit, bis sich der erste Vorgärrahmen wieder auf dem Niveau a befindet. Nun wird der als erster eingelaufene, sich in Position $aC_2$ befindliche Kipptrögelapparat nach $aC_3$ und gleichzeitig der in $aC_1$ befindliche Kipptrögelapparat auf $aC_2$ verschoben. Der in Position $aC_3$ befindliche Kipptrögelapparat wird nun durch die Transporteinrichtung 27x aus dem Gärschrank durch die Öffnung P herausbewegt und in die Stanzmaschine D eingeführt, in welcher die Teigstükke geformt und gegebenenfalls gewendet werden. Erfolgt letzteres nicht in der Stanzmaschine, dann müssen die Teigstücke nach Durchlaufen der Stanze in einem gesonderten Arbeitsgang gewendet werden. Der mit den gewendeten Teigstücken beladene Kipptrögelapparat wird dann durch eine entsprechende Hubeinrichtung E auf das Niveau d gehoben und durch die Öffnung R auf den obersten, aus einer Warteposition auf dieses Niveau gebrachten Hauptgärrahmen 3 durch die Fördereinrichtung 27y so weit eingeschoben, bis dieser Kipptrögelapparat backofenseitig mit seinen Vorsprüngen 13 am Förderband 7, und an dem dem Backofen abgewandten Ende mit seinen Laufrollen 10 am Förderband 8 aufliegt. Der so eingelaufene Kipptrögelapparat befindet sich nun in Position $dC_3$ und wird nach $dC_2$ verschoben, worauf dann ein weiterer Kipptrögelapparat, auf dem gleichen Wege wie der erste, in Position $dC_3$ eingeschoben wird. Beide Kipptrögelapparate werden nun um je eine Position weiterverschoben, so daß sie sich dann in den Positionen $dC_1$ und $dC_2$ befinden. Der so beladene Hauptgärrahmen wird nun von dem Niveau d auf das Niveau e gehoben und ein weiterer Hauptgärrahmen auf dem Niveau d bereitgestellt, welcher dann analog dem ersten mit Kipptrögelapparaten beladen wird. Danach wird der auf
dem Niveau e befindliche Hauptgärrahmen auf das Niveau
f, und der auf dem Niveau d befindliche auf das Niveau
e gehoben, worauf dann auf dem Niveau d ein dritter
Hauptgärrahmen bereitgestellt und ebenfalls in der beschriebenen Weise beladen wird. In dieser Lage werden
die Kipptrögelapparate so lange belassen, bis die Hauptgärung der Teigstücke abgeschlossen ist. Nachdem alle
Kipptrögelapparate von den Vorgärrahmen abgelaufen und
auf die Hauptgärrahmen aufgelaufen sind, kann bereits
mit der neuerlichen Beladung der Vorgärrahmen begonnen
werden.

Durch das Höhenverstellen der Hauptgärrahmen 3 werden
die Vorsprünge 21 der Verlängerungen 19 der Rahmen der
Netzbänder mit den Mitnehmern 22 im Eingriff gebracht.
Nach Ablauf der Hauptgärzeit werden mittels der Transporteinrichtungen 18 die Netzbänder 15 aus dem Backofen
herausbefördert und auf den Laufschienen 14 unter die
auf den Hauptgärrahmen 2 befindlichen Kipptrögelapparate
gezogen. Danach werden die ausgegorenen Teigstücke auf
die Netzbänder 15 abgelegt und letztere mittels der
Transporteinrichtungen 18 wieder in den Backofen 20
eingeschoben. Die entleerten Kipptrögelapparate werden
durch die Transporteinrichtung 27z durch die Öffnung S
des Gärschrankes aus letzterem herausgeschoben und wieder im Kipptrögelmagazin A für eine weitere Verwendung
bereitgehalten.

Zum Ausbacken, also zum Ausbringen der fertigen Backwaren aus dem Backofen, werden die Netzbänder mit dem
fertigen Gebäck mittels der Transporteinrichtungen 18
aus dem Backofen heraus auf die an den Hauptgärrahmen 3
angelenkten Laufschienen 14 gezogen, welche dann mit
ihren dem Backofen abgewandten Enden mittels des Seilzuges 24 abgesenkt werden, wodurch das fertige Gebäck
von den Netzbändern in bereitgestellte Körbe abrutscht.
Nach Anheben der dem Backofen abgewandten Enden der Laufschienen 14 können die Netzbänder 15 bereits wieder mit ausgegorenen Teigstücken belegt werden.

In Fig. 6 ist der Weg der Kipptrögelapparate eingezeichnet, und zwar der Weg vom Kipptrögelmagazin A bis zur Hubeinrichtung E mit dünnen Linien und der Weg nach dem Anheben von der Hubeinrichtung E bis zum Abkippen der Teigstücke bei $F_1$ und $F_2$ auf die Netzbänder mit dicken Linien. Der Weg der Kipptrögelapparate vom Ablegen der Teigstücke bei $F_1$ und $F_2$ zurück zum Kipptrögelmagazin A ist strichliert eingezeichnet.

Bei der Herstellung von Brot werden die mit den Teigstücken beladenen, entsprechend ausgestalteten Kipptrögelapparate erst bei der Öffnung R in den Gärschrank eingebracht, also auf die Hauptgärrahmen aufgeschoben, weil eine Vorgärung bei Brot nicht erfolgt. Das Verteilen der Kipptrögelapparate und Ablegen der Teigstücke auf die Netzbänder erfolgt in gleicher Weise wie hinsichtlich der Semmelerzeugung geschildert. Die entleerten Kipptrögelapparate werden aber bei der Öffnung R auch wieder aus dem Gärschrank herausgeführt und eventuell in einem Magazin gestapelt.

Wenn die Netzbänder händisch belegt werden sollen, also z.B. bei der Bereitung von Feinbackwaren, dann werden die Netzbänder bei leeren Aufnahmerahmen auf die Laufschienen 14 gezogen, wonach dann die Hauptgärrahmen durch einzelnes Absenken bzw. Anheben in die Arbeitshöhe bewegt werden. Nach durch die Tür 26 erfolgtem Eintritt der Bedienungsperson in den Gärschrank werden die Laufschienen 3" der Hauptgärrahmen nach innen geklappt, wodurch ein freier Zutritt zu den Netzbändern möglich ist. Durch die Tür 32 ist ein Zutritt zu der anderen Längsseite der Netzbänder 15 ermöglicht, was ein besonders leichtes Belegen der letzteren ergibt. Nach händischen Belegen der Netzbänder werden die Hauptgärrahmen wieder auf die Niveaus d,e,f gebracht und die Netzbänder in den Ofen eingeschoben.

0011061

Wenn eine direkte Beschickung des Backofens 20 bzw. ein direktes Ausbacken erwünscht ist, werden alle Aufnahmerahmen, also Vorgärrahmen und Hauptgärrahmen, über das Niveau der obersten Etage des Backofens, also über das Niveau f, angehoben, wodurch, nach Öffnen der backofenseitigen Wand des Gärschrankes, ein freier Zugang zu den Backofentüren möglich ist, da, wie angeführt, der Gärschrank durch die Türen 26 und 32 begehbar ist.

- 12 -

0011061

Patentansprüche

1. Gärschrank für die Backwarenbereitung, in welchem zwei voneinander unabhängige Fördereinrichtungen vorgesehen sind, von denen die erste zur Aufnahme der mit den zu vergärenden Teigstücken beladenen Kipptrögelapparate (9) und die zweite zur Aufnahme der mit den der Hauptgärung zu unterwerfenden Teigstücken beladenen Kipptrögelapparate (9) bestimmt ist, wobei jede der Fördereinrichtungen Rahmen (2,3) zur Aufnahme der Kipptrögelapparate (9) aufweist, dadurch gekennzeichnet, daß die, Laufschienen (3',3") für die Kipptrögelapparate (9) aufweisenden Aufnahmerahmen (2, 3) mindestens doppelt so breit sind wie die Kipptrögelapparate (9), daß die Aufnahmerahmen (2, 3) unabhängig voneinander anheb- und absenkbar sind und Einrichtungen (7, 8) zum horizontalen Verschieben der Kipptrögelapparate (9) quer zu deren Einlaufrichtung aufweisen.

2. Gärschrank nach Anspruch 1, dadurch gekennzeichnet, daß für das Anheben und Absenken der Aufnahmerahmen (2, 3) jeder derselben an einem separaten Seilzug (4) aufgehängt ist.

3. Gärschrank nach Anspruch 1 oder 2, dadurch gekennzeichnet, daß die Einrichtungen zum horizontalen Verschieben der Kipptrögelapparate (9) als quer zur Einlaufrichtung der letzteren verlaufende Förderbänder (7, 8) ausgebildet sind.

4. Gärschrank nach Anspruch 3, dadurch gekennzeichnet, daß bei den für die Aufnahme der mit den vorzugärenden Teigstücken beladenen Kipptrögelapparate bestimmten Aufnahmerahmen (2) die in Einlaufrichtung gemessene Entfernung der Förderbänder (7, 8) der in Längsrichtung der Kipptrögelapparate (9) gemessenen Entfernung (D) zwischen den an letzteren vorgesehenen Laufrollen (11) entspricht.

5. Gärschrank nach einem der Ansprüche 1 bis 3, welcher direkt von einem, herausziehbare Netzbänder aufweisenden Backofen angeordnet ist, dadurch gekennzeichnet, daß bei den für die Aufnahme der mit den der Hauptgärung zu unterwerfenden Teigstücken beladenen Kipptrögelapparate bestimmten Aufnahmerahmen (3) die backofenseitigen Querstege (12) portalartig ausgebildet sind.

6. Gärschrank nach Anspruch 5, dadurch gekennzeichnet, daß bei den für die Aufnahme der mit den der Hauptgärung zu unterwerfenden Teigstücken beladenen Kipptrögelapparate bestimmten Aufnahmerahmen (3) das backofenseitige Förderband (7) gleich hoch angeordnet ist wie der waagrechte Oberteil des portalartigen Quersteges (12).

7. Gärschrank nach Anspruch 5 oder 6, dadurch gekennzeichnet, daß bei den für die Aufnahme der mit den der Hauptgärung zu unterwerfenden Teigstücken beladenen Kipptrögelapparate bestimmten Aufnahmerahmen (3) unterhalb der Laufschienen (3', 3") für die Kipptrögelapparate weitere Laufschienen (14) für das Einlaufen der aus dem Backofen (20) herausziehbaren Netzbänder (15) vorgesehen sind.

8. Gärschrank nach Anspruch 7, dadurch gekennzeichnet, daß an den weiteren, für die Netzbänder (15) bestimmten Laufschienen (14) eine Fördereinrichtung (18) für das Herausziehen der Netzbänder (15) aus dem Backofen (20) angeordnet ist.

9. Gärschrank nach Anspruch 7 oder 8, dadurch gekennzeichnet, daß die weiteren, für die Netzbänder (15) bestimmten Laufschienen (14) mit ihren backofenseitigen Enden an den Laufschienen (3', 3") für die Kipptrögelapparate, gegebenenfalls über Laschen (2, 3), schwenkbar angelenkt sind, und daß ihre anderen Enden absenkbar sind.

10. Gärschrank nach Anspruch 9, dadurch gekennzeichnet, daß zum Absenken der anderen Enden der weiteren, für die Netzbänder (15) bestimmten Laufschienen (14) ein Seilzug mit an dem zugehörigen Aufnahmerahmen (3) angeordneter Seiltrommel (24) vorgesehen ist.

11. Gärschrank nach einem der Ansprüche 1 bis 10, dadurch gekennzeichnet, daß wenigstens einer der, Laufschienen für die Kipptrögelapparate bildenden Längsholme (3") der Aufnahmerahmen an an den Querstegen angelenkten Laschen (25) befestigt ist, und daß der Gärschrank (1) in wenigstens jener Seitenwand, die dem solcherart einklappbaren Längsholm (3") benachbart ist, eine Tür (26) aufweist.

12. Gärschrank nach einem der Ansprüche 1 bis 11, dadurch gekennzeichnet, daß alle Aufnahmerahmen (2,3) über die Höhe der obersten Etage des dem Gärschrank (1) gegenüberliegenden Backofens (20) anhebbar sind, und daß der Gärschrank (1) in wenigstens einer seiner Seitenwände eine Tür (26 oder 32) aufweist.

0011061

**FIG.1**

**FIG.5**

**FIG.2**

**FIG.3**

**FIG.4**

FIG.6

FIG.7

FIG.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>GB - A - 985 054</u> (PERKINS)<br>  * Seite 8, Zeile 24 – Seite 9, Zeile 120; Figuren 1-3,7,8 *<br><br>-- | 1 |
| A | <u>DE - A - 1 532 965</u> (PROHASKA)<br>  * Seite 12, Zeile 1 – Seite 14, Zeile 31; Figuren 1-9 *<br><br>-- | 1 |
| A | <u>DE - A - 2 521 208</u> (SCHIMKE)<br>  * Seite 5; Figuren 1,2 *<br><br>---- | 1 |

**KLASSIFIKATION DER ANMELDUNG (Int.Cl. ³)**

A 21 C 13/00
           13/02
            9/08

**RECHERCHIERTE SACHGEBIETE (Int. Cl. ³)**

A 21 C
A 21 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-02-1980 | VROMMAN |

EPA form 1503.1  06.78